# EUROPÄISCHE PATENTANMELDUNG

(11) **EP 2 136 607 A2**
(43) Veröffentlichungstag der Anmeldung: **23.12.2009**
(21) Anmeldenummer: 09007746.2
(22) Anmeldetag: 12.06.2009
(51) Int. Cl.: H05B 37/02

(54) **Verfahren zum Betreiben einer Akku-Handlampe**

(30) Priorität: 20.06.2008 DE 102008030627
(71) Anmelder: Metabowerke GmbH, 72622 Nürtingen (DE)
(72) Erfinder: Gräber, Jochen, 73266 Bissingen (DE); Diebold, Mattias, 73342 Bad Ditzenbach (DE); Frantz, Roland, 72639 Neuffen (DE)
(74) Vertreter: Dreiss

(57) **Zusammenfassung**

Verfahren zum Betreiben eine Akku-Handlampe (2) mit einer Beleuchtungsquelle (4), mit einem manuell betätigbaren Ein/Ausschalter (8) und einer Steuerelektronik (10), welche jeweils die momentane Einschaltdauer t der Akku-Handlampe (2) erfasst und die Akku-Handlampe (2) automatisch ausschaltet, wenn die Einschaltdauer t einen vorgegebenen Wert t₁ überschreitet, wobei die der Beleuchtungsquelle (4) zugeführte elektrische Leistung vor dem automatischen Ausschalten der Akku-Handlampe (2) mittels der Steuerelektronik (10) mindestens einmal für eine kurze Zeit dt von einem Nominalleistungsniveau (12) auf ein gegenüber dem Nominalleistungsniveau (12) reduziertes Leistungsniveau (14) abgesenkt wird und wieder zurück auf das Nominalleistungsniveau (12) angehoben wird.

## Beschreibung

Die Erfindung betrifft ein Verfahren zum Betreiben einer Akku-Handlampe mit einer Beleuchtungsquelle, mit einem manuell betätigbaren Ein-/Ausschalter, insbesondere in Form eines Berührungsschalters oder -tasters, und einer Steuerelektronik, welche jeweils die momentane Einschaltdauer t der Akku-Handlampe erfasst und die Akku-Handlampe automatisch ausschaltet, wenn die Einschaltdauer t einen vorgegebenen Wert t₁ überschreitet. Ferner betrifft die Erfindung eine solche Akku-Handlampe sowie eine Steuerelektronik zum Steuern einer solchen Akku-Handlampe.

Derartige Verfahren zum Betreiben einer Akku-Handlampe sind bekannt. Um den Akku einer Akku-Handlampe zu schonen, schaltet die Akku-Handlampe beim Überschreiten der Einschaltdauer t über den vorgegebenen Wert t₁ einfach ab.

Dies geschieht für den Benutzer meist unvorhersehbar, so dass er durch das automatische Abschalten der Akku-Handlampe überrascht wird und irrtümlich auf ein Durchbrennen der Beleuchtungsquelle schließt.

Gemäß DE 94 12 976 U1 wird bei einer Halogenlampe ein Tiefentladeschutz durch Messung der Entladeschlussspannung durchgeführt, indem beim Erreichen der Entladeschlussspannung die Halogenlampe automatisch abgeschaltet und dieser Zustand in nicht näher beschriebener Weise durch Blinken signalisiert wird. Erst durch manuelles Ausschalten wird der Scheinwerfer außer Betrieb genommen.

Gemäß DE 24 46 958 B2 wird ebenfalls der Entladezustand einer Batterie eines elektrischen Geräts gemessen, um eine automatische Abschaltung eines zugehörigen Verbrauchers zu veranlassen, wenn die Batterie eine bestimmte Zeitspanne lang in einem bestimmten Entladezustand betrieben worden ist. Während eines solchen Entladezustands blinkt eine LED Warnleuchte.

Gemäß DE 93 14 151 U1 wird ebenfalls die Batteriespannung zur Praktizierung eines Tiefentladeschutzes überwacht. Die Verbraucher werden automatisch abgeschaltet, wenn eine Tiefentladeschwelle erreicht wird. Wird eine Mindestladung wieder erreicht, so werden die Verbraucher wieder automatisch zugeschaltet. Auch eine zeitverzögerte Lastabschaltung ist vorgesehen, um zu verhindern, dass bei nur kurzzeitiger Unterschreitung der Tiefentladeschwelle die Verbraucher sofort abgeschaltet werden. Der Status "Tiefentladung" wird durch eine LED im stromsparenden Blinkbetrieb angezeigt.

Der vorliegenden Erfindung liegt die Aufgabe zugrunde, ein Verfahren vorzuschlagen, bei dem das automatische Ausschalten der Akku-Handlampe benutzerfreundlicher gestaltet ist.

Diese Aufgabe wird erfindungsgemäß dadurch gelöst, dass die der Beleuchtungsquelle zugeführte elektrische Leistung vor dem automatischen Ausschalten der Akku-Handlampe mittels der Steuerelektronik mindestens einmal für eine kurze Zeit dt von einem Nominalleistungsniveau auf ein gegenüber dem Nominalleistungsniveau reduziertes Leistungsniveau abgesenkt wird und wieder zurück auf das Nominalleistungsniveau angehoben wird. Von besonderem Vorteil dabei ist, dass die Akku-Handlampe sich nicht überraschend ausschaltet, sondern dem Benutzer das baldige Abschalten der Akku-Handlampe hierdurch signalisiert wird.

Nach einer vorteilhaften Weiterbildung des erfindungsgemäßen Verfahrens wird die elektrische Leistung mehrfach, insbesondere zyklisch, abgesenkt und wieder angehoben. Durch das mehrfache Absenken und Wiederanheben der elektrischen Leistung wird die Erfassbarkeit des Signals verbessert und die Gefahr reduziert, dass der Benutzer das Signal mit einem Wackelkontakt der Akku-Handlampe verwechselt.

Alternativ hierzu kann die elektrische Leistung mit immer kürzer werdenden Zyklen abgesenkt und wieder angehoben werden. Durch die immer kürzer werdenden Zyklen wird das Signal als Countdown erfasst, wodurch ein Benutzer abschätzen kann, wann die Akku-Handlampe automatisch ausgeschaltet wird.

Das reduzierte Leistungsniveau kann zumindest grundsätzlich auch 0 Watt betragen. Bevorzugt wird allerdings eine Verfahrensführung, bei der das reduzierte Leistungsniveau 30 % - 95 %, insbesondere 40 % - 90 %, insbesondere 50 % - 85 % des Nominalleistungsniveaus beträgt. Dadurch wird zum einen gewährleistet, dass der Benutzer das Signal nicht mit einer Störung der Akku-Handlampe verwechselt, wie es beispielsweise bei einem Absenken auf ein reduziertes Leistungsniveau von 0 Watt denkbar wäre. Darüber hinaus steht dem Benutzer bei einem reduzierten Leistungsniveau von 30% - 95 % des Nominalleistungsniveaus noch ausreichend Licht zum Fortführen seiner Tätigkeit zur Verfügung.

Die Zeit dt, während der die elektrische Leistung von dem Nominalleistungsniveau auf das reduzierte Leistungsniveau abgesenkt wird und wieder zurück auf das Nominalleistungsniveau angehoben wird, beträgt vorzugsweise 0,5 - 5 Sekunden, insbesondere 0,5 - 3 Sekunden, insbesondere 1 - 2 Sekunden. Die Zeit dt umfasst die Zeitspanne ab Unterschreiten der elektrischen Leistung unter das Nominalleistungsniveau bis zu dem Zeitpunkt, an dem die elektrische Leistung wieder das Nominalleistungsniveau erreicht. Die Phasen des Absenkens der elektrischen Leistung auf das reduzierte Leistungsniveau und Wiederanhebens auf das Nominalleistungsniveau sind in der Zeit dt mit inbegriffen. Dadurch, dass die Zeit dt 0,5 - 5 Sekunden beträgt, ist das Signal für dem Benutzer als solches einfacher erfassbar und von einer technischen Störung leichter unterscheidbar.

Es hat sich als vorteilhaft erwiesen, wenn der vorgegebene Wert t₁, nach dessen Überschreiten die Akku-Handlampe automatisch ausschaltet, 30 Sekunden bis 30 Minuten, insbesondere 1 Minute - 25 Minuten, insbesondere 5 - 20 Minuten umfasst.

Ferner wird eine Weiterbildung des Verfahrens vorgeschlagen, bei dem die der Beleuchtungsquelle zugeführte elektrische Leistung 10 Sekunden - 3 Minuten, insbesondere 10 Sekunden - 2 Minuten, insbesondere 20 Sekunden - 1 Minute vor dem automatischen Ausschalten abgesenkt wird.

Schließlich sieht eine Weiterbildung des Verfahrens vor, dass durch erneutes Betätigen des Ein-/Ausschalters während eines Triggerintervalls zwischen dem erstmaligen Absenken und dem automatischen Ausschalten bei t₁ die momentane Einschaltdauer t der Akku-Handlampe auf 0 Sekunden zurückgesetzt wird oder der vorgegebene Wert t₁ erhöht wird. Durch das Zurücksetzen der Einschaltdauer t auf 0 Sekunden ist die Steuerelektronik in den gleichen Zustand gesetzt, als wäre die Akku-Handlampe gerade erst eingeschaltet worden. Alternativ dazu kann der vorgegebenen Werts t₁ erhöht werden. Bevorzugt wird der Wert t₁ verdoppelt. Auf diese Weise kann verhindert werden, dass die Akku-Handlampe ausschaltet, also die Beleuchtung unterbrochen wird, und zwar lediglich durch erneutes Betätigen des Ein-/Ausschalters, der vorzugsweise in Form eines Berührungsschalters oder -tasters ausgebildet ist.

Zur Lösung genannter Aufgabe wird ferner eine Akku-Handlampe vorgeschlagen, bei der die Steuerelektronik so ausgebildet ist, dass die der Beleuchtungsquelle zugeführte elektrische Leistung vor dem automatischen Ausschalten der Akku-Handlampe mindestens einmal für eine kurze Zeit dt von einem Nominalleistungsniveau auf ein gegenüber dem Nominalleistungsniveau reduziertes Leistungsniveau abgesenkt wird und wieder zurück auf das Nominalleistungsniveau angehoben wird.

Weiter wird eine Ausführungsform vorgeschlagen, bei der die Steuerelektronik so ausgebildet ist, dass die elektrische Leistung mehrfach, insbesondere zyklisch, abgesenkt und wieder angehoben wird.

Es erweist sich weiter als vorteilhaft, wenn die Steuerelektronik so ausgebildet ist, dass das reduzierte Leistungsniveau 30 % - 95 %, insbesondere 40 % - 90 %, insbesondere 50 % - 85 % des Nominalleistungsniveaus entspricht.

Ferner wird eine Ausführungsform bevorzugt, bei der die Steuerelektronik so ausgebildet ist, dass die Zeit dt, während der die elektrische Leistung von dem Nominalleistungsniveau auf das reduzierte Leistungsniveau abgesenkt wird und wieder zurück auf das Nominalleistungsniveau angehoben wird, 0,5 - 5 Sekunden, insbesondere 0,5 - 3 Sekunden, insbesondere 1 - 2 Sekunden umfasst.

Ferner erweist es sich als vorteilhaft, wenn der vorgegebene Wert t₁, nach dessen Überschreiten die Akku-Handlampe automatisch ausschaltet, 30 Sekunden - 30 Minuten, insbesondere 1 - 30 Minuten, insbesondere 5 - 20 Minuten beträgt.

Schließlich wird eine Ausführungsform der Akku-Handlampe bevorzugt, bei der die Steuerelektronik so ausgebildet ist, dass die der Beleuchtungsquelle zugeführte elektrische Leistung 10 Sekunden - 3 Minuten, insbesondere 10 Sekunden - 2 Minuten, insbesondere 20 Sekunden - 1 Minute, vor dem automatischen Ausschalten abgesenkt wird.

Schließlich wird eine Ausführungsform der Akku-Handlampe bevorzugt, bei der die Steuerelektronik so ausgebildet ist, dass durch erneutes Betätigen des Ein-/Ausschalters während des Triggerintervalls zwischen dem erstmaligen Absenken und dem automatischen Ausschalten bei t₁ die momentane Einschaltdauer t der Akku-Handlampe auf 0 Sekunden zurückgesetzt wird oder der vorgegebene Wert t₁ erhöht wird.

Schließlich wird Schutz beanspruch für eine Steuerelektronik, die zur Durchführung eines Verfahrens nach einem oder mehreren der Ansprüche 1 - 7 ausgebildet ist.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Zeichnung zeigt:
- Figur 1: ein schematisch dargestellter Aufbau einer Akku-Handlampe;
- Figur 2: eine schematische Darstellung des erfindungsgemäßen Verfahrens.

Die Figuren zeigen schematisch eine Akku-Handlampe 2 mit einer Beleuchtungsquelle 4, einem Akku 6 und einem Ein-/Ausschalter 8. Der Ein-/Ausschalter 8 wirkt mit einer Steuerelektronik 10 der Akku-Handlampe 2 zusammen. Von dem Zeitpunkt des Einschaltens der Akku-Handlampe wird die Einschaltdauer t durch die Steuerelektronik 10 erfasst. Kurz vor Erreichen eines vorgegebenen Werts t₁, der in der Steuerelektronik 10 hinterlegt ist, wird die der Beleuchtungsquelle 4 zugeführte elektrische Leistung P für mehrere kurze Zeitabschnitte dt von einem Nominalleistungsniveau 12 auf ein gegenüber dem Nominalleistungsniveau 12 reduziertes Leistungsniveau 14 abgesenkt und wieder zurück auf das Nominalleistungsniveau 12 angehoben.

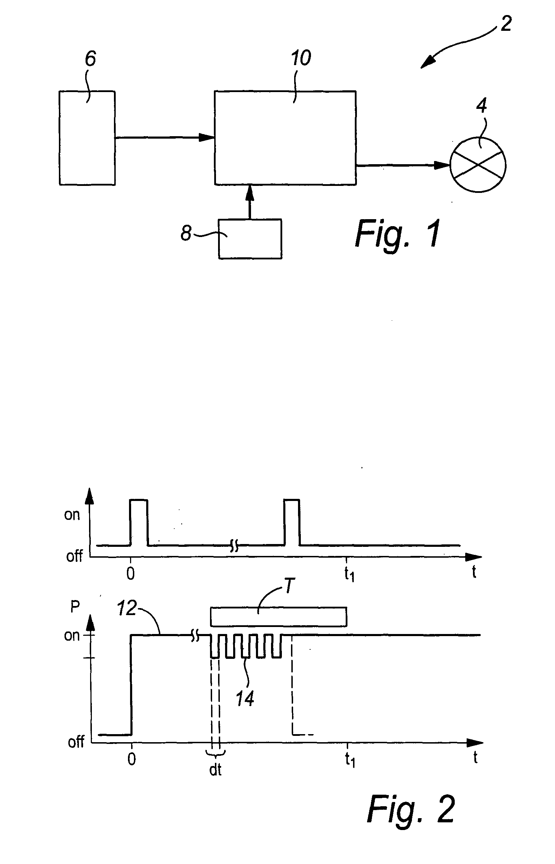

In Figur 2 sind zwei Diagramme übereinander und mit Bezug zueinander abgebildet. Das obere Diagramm zeigt das Betätigen des Ein-/Ausschalters 8 durch einen Benutzer. Zum Zeitpunkt t = 0 schaltet der Benutzer durch Betätigen des Ein-/Ausschalters 8 die Akku-Handlampe 2 an. Dabei regelt die Steuerelektronik 10 die der Beleuchtungsquelle 4 vom Akku 6 zugeführte elektrische Leistung P derart, dass sie auf dem Nominalleistungsniveau 12 liegt. Das obere Diagramm in Figur 2 zeigt darüber hinaus, dass der Benutzer innerhalb eines Triggerintervalls T den Ein-/Ausschalter 8 erneut betätigt, wodurch das automatische Ausschalten der Akku-Handlampe 2 auf einen späteren Zeitpunkt verschoben wird, beispielsweise indem der Wert t₁ erhöht oder die Einschaltdauer t auf 0 Sekunden zurückgesetzt wird.

Das untere Diagramm in Figur 2 zeigt die der Beleuchtungsquelle 4 zugeführte elektrische Leistung P. Beim Einschalten der Akku-Handlampe 2, also beim Betätigen des Ein-/Ausschalters 8, wird der Beleuchtungsquelle 4 die Leistung P auf Nominalleistungsniveau 12 zugeführt. Vor dem Erreichen des vorgegebenen Werts t₁ reduziert die Steuerelektronik 10 für kurze Zeit dt die elektrische Leistung P von dem Nominalleistungsniveau 12 auf das Leistungsniveau 14 und hebt die Leistung anschließend wieder auf das Nominalleistungsniveau 12 an. Wie in Figur 2 dargestellt, wird die elektrische Leistung P mehrfach und zyklisch abgesenkt und wieder angehoben. Das Leistungsniveau 14 liegt dabei zwischen 30 % und 95 % des Nominalleistungsniveaus 12.

Durch das mehrfache Absenken der der Beleuchtungsquelle 4 zugeführten elektrischen Leistung P und Wiederanheben wird dem Benutzer signalisiert, dass die Akku-Handlampe 2 bald automatisch abschaltet.

Bei dem in Figur 2 gezeigten Ausführungsbeispiel ist ersichtlich, dass die Akku-Handlampe 2 bzw. deren Steuerelektronik 10 so ausgebildet ist, dass der Benutzer den Ein-/Ausschalter 8 innerhalb des Triggerintervalls T erneut betätigen kann, mit der Folge, dass die Steuerelektronik 10 die Akku-Handlampe 2 nicht automatisch abschaltet, sondern der Wert t₁ erhöht oder alternativ die Einschaltdauer t auf 0 Sekunden zurückgesetzt wird, so dass sich die Akku-Handlampe erst später abschaltet.

## Patentansprüche

1. Verfahren zum Betreiben eine Akku-Handlampe (2) mit einer Beleuchtungsquelle (4), mit einem manuell betätigbaren Ein-/Ausschalter (8), insbesondere in Form eines Berührungsschalters oder -tasters, und einer Steuerelektronik (10), welche jeweils die momentane Einschaltdauer t der Akku-Handlampe (2) erfasst und die Akku-Handlampe (2) automatisch ausschaltet, wenn die Einschaltdauer t einen vorgegebenen Wert t₁ überschreitet, **dadurch gekennzeichnet, dass** die der Beleuchtungsquelle (4) zugeführte elektrische Leistung P vor dem automatischen Ausschalten der Akku-Handlampe (2) mittels der Steuerelektronik (10) mindestens einmal für eine kurze Zeit dt von einem Nominalleistungsniveau (12) auf ein gegenüber dem Nominalleistungsniveau (12) reduziertes Leistungsniveau (14) abgesenkt wird und wieder zurück auf das Nominalleistungsniveau (12) angehoben wird.

2. Verfahren nach Anspruch 1, **dadurch gekennzeichnet, dass** die elektrische Leistung P mehrfach, insbesondere zyklisch, abgesenkt und wieder angehoben wird.

3. Verfahren nach Anspruch 1 oder 2, **dadurch gekennzeichnet, dass** das reduzierte Leistungsniveau (14) 30% bis 95%, insbesondere 40% bis 90%, insbesondere 50% bis 85% des Nominalleistungsniveaus (12) entspricht.

4. Verfahren nach einem oder mehreren der vorhergehenden Ansprüche, **dadurch gekennzeichnet, dass** die Zeit dt, in der die elektrische Leistung P von dem Nominalleistungsniveau (12) auf das reduzierte Leistungsniveau (14) abgesenkt wird und wieder zurück auf das Nominalleistungsniveau (12) angehoben wird, 0,5 bis 5 Sekunden, insbesondere 0,5 bis 3 Sekunden, insbesondere 1 bis 2 Sekunden umfasst.

5. Verfahren nach einem oder mehreren der vorhergehenden Ansprüche, **dadurch gekennzeichnet, dass** der vorgegebene Wert t₁, nach dessen Überschreiten die Akku-Handlampe (2) automatisch ausschaltet, 30 Sekunden bis 30 Minuten, insbesondere 1 bis 25 Minuten, insbesondere 5 bis 20 Minuten umfasst.

6. Verfahren nach einem oder mehreren der vorhergehenden Ansprüche, **dadurch gekennzeichnet, dass** die der Beleuchtungsquelle (4) zugeführte elektrische Leistung P 10 Sekunden bis 3 Minuten, insbesondere 10 Sekunden bis 2 Minuten, insbesondere 20 Sekunden bis 1 Minute, vor dem automatischen Ausschalten abgesenkt wird.

7. Verfahren nach einem oder mehreren der vorhergehenden Ansprüche, **dadurch gekennzeichnet, dass** durch erneutes Betätigen des Ein-/Ausschalters (8) während eines Triggerintervalls T zwischen dem erstmaligen Absenken und dem automatischen Ausschalten bei t₁ die momentane Einschaltdauer t der Akku-Handlampe (2) auf 0 Sekunden zurückgesetzt wird oder der vorgegebene Wert t₁ erhöht wird.

8. Akku-Handlampe (2) mit einer insbesondere einen Glühdraht aufweisenden Beleuchtungsquelle (4), einem manuell betätigbaren Ein-/Ausschalter (8) und einer Steuerelektronik (10), die die momentane Einschaltdauer t der Akku-Handlampe (2) erfasst und die Akku-Handlampe (2) automatisch ausschaltet, wenn die Einschaltdauer t einen vorgegebenen Wert t₁ überschreitet, **dadurch gekennzeichnet, dass** die Steuerelektronik (10) so ausgebildet ist, dass die der Beleuchtungsquelle (4) zugeführte elektrische Leistung P vor dem automatischen Ausschalten der Akku-Handlampe (2) mindestens einmal für eine kurze Zeit dt von einem Nominalleistungsniveau (12) auf ein gegenüber dem Nominalleistungsniveau (12) reduziertes Leistungsniveau (14) abgesenkt wird und wieder zurück auf das Nominalleistungsniveau (12) angehoben wird.

9. Akku-Handlampe (2) nach Anspruch 8, **dadurch gekennzeichnet, dass** die Steuerelektronik (10) so ausgebildet ist, dass die elektrische Leistung P mehrfach, insbesondere zyklisch, abgesenkt und wieder angehoben wird.

10. Akku-Handlampe (2) Anspruch 8 oder 9, **dadurch gekennzeichnet, dass** die Steuerelektronik (10) so ausgebildet ist, dass das reduzierte Leistungsniveau (14) 30% bis 95%, insbesondere 40% bis 90%, insbesondere 50% bis 85% des Nominalleistungsniveaus (12) entspricht.

11. Akku-Handlampe (2) Verfahren nach einem oder mehreren der Ansprüche 8 bis 10, **dadurch gekennzeichnet, dass** die Steuerelektronik (10) so ausgebildet ist, dass die Zeit dt, in der die elektrische Leistung P von dem Nominalleistungsniveau (12) auf das reduzierte Leistungsniveau (14) abgesenkt wird und wieder zurück auf das Nominalleistungsniveau (12) angehoben wird, 0,5 bis 5 Sekunden, insbesondere 0,5 bis 3 Sekunden, insbesondere 1 bis 2 Sekunden umfasst.

12. Akku-Handlampe (2) nach einem oder mehreren der Ansprüche 8 bis 11, **dadurch gekennzeichnet, dass** der vorgegebene Wert t₁, nach dessen Überschreiten die Akku-Handlampe (2) automatisch ausschaltet, 30 Sekunden bis 30 Minuten, insbesondere 1 bis 25 Minuten, insbesondere 5 bis 20 Minuten umfasst.

13. Akku-Handlampe (2) nach einem oder mehreren der Ansprüche 8 bis 12, **dadurch gekennzeichnet, dass** die Steuerelektronik (10) so ausgebildet ist, dass die der Beleuchtungsquelle (4) zugeführte elektrische Leistung P 10 Sekunden bis 3 Minuten, insbesondere 10 Sekunden bis 2 Minuten, insbesondere 20 Sekunden bis 1 Minute, vor dem automatischen Ausschalten abgesenkt wird.

14. Akku-Handlampe (2) nach einem oder mehreren der Ansprüche 8 bis 13, **dadurch gekennzeichnet, dass** die Steuerelektronik (10) so ausgebildet ist, dass durch erneutes Betätigen des Ein-/Ausschalters (8) während eines Triggerintervalls T zwischen dem erstmaligen Absenken und dem automatischen Ausschalten bei t₁ die momentane Einschaltdauer t der Akku-Handlampe (2) auf 0 Sekunden zurückgesetzt wird oder der vorgegebene Wert t₁ erhöht wird.

15. Steuerelektronik (10) zum Steuern einer Akku-Handlampe (2), **dadurch gekennzeichnet, dass** die Steuerelektronik (10) zur Ausführung eines Verfahrens nach einem oder mehreren der Ansprüche 1 bis 6 ausgebildet ist.
